# EUROPÄISCHE PATENTANMELDUNG

(11) **EP 1 524 423 A1**
(43) Veröffentlichungstag der Anmeldung: **20.04.2005**
(21) Anmeldenummer: 03023212.8
(22) Anmeldetag: 13.10.2003
(51) Int. Cl.: F02C 9/34

(54) **Verfahren und Vorrichung zum Ausgleichen von Schwankungen der Brennstoffzusammensetzung in einer Gasturbinenanlage**

(71) Anmelder: SIEMENS AKTIENGESELLSCHAFT, 80333 München (DE)
(72) Erfinder: Berenbrink, Peter, 46045 Oberhausen (DE); Blomeyer, Malte, Dr., 45472 Mülheim (DE)

(57) **Zusammenfassung**

In einem Verfahren zum Ausgleichen von Schwankungen der Brennstoffzusammensetzung in einer Gasturbinenanlage mit mindestens zwei parallel zu betreibenden Brennerstufen erfolgt als Reaktion auf die Schwankungen der Brennstoffzusammensetzung ein Regeln der Brennstoffzufuhr zu mindestens zwei der Brennerstufen, wobei beim Regeln der Brennstoffzufuhr der Brennstoffsplitt zwischen den Brennerstufen, d.h. die relative Vereilung des Brennstoffes auf die Brennerstufen, auf einen Zielwert eingestellt oder auf einem Zielwert gehalten wird. Dabei kann der Zielwert bspw. eine Konstante oder eine Funktion von einer oder mehreren Variablen sein. Insbesondere kann die Gasturbinenanlage eine Pilot-Brennerstufe und eine Haupt-Brennerstufe umfassen, wobei beim Regeln der Brennstoffzufuhr der Brennstoffsplitt zwischen Pilot- und Haupt-Brennerstufe auf einen Zielwert eingestellt oder auf einem Zielwert gehalten wird.

## Beschreibung

Eine Gasturbinenanlage umfasst im einfachsten Fall eine Verdichter, eine Brennkammer sowie eine Turbine. Im Verdichter erfolgt ein Verdichten von angesaugter Luft, welcher anschließend ein Brennstoff beigemischt wird. In der Brennkammer erfolgt eine Verbrennung des Gemisches, wobei die Verbrennungsabgase der Turbine zugeführt werden, von der den Verbrennungsabgasen Energie entzogen und in mechanische Energie umgesetzt wird.

Gasturbinenanlagen werden heutzutage mit mehrstufigen Brennkammern ausgestattet, in denen mehrere parallel zu betreibende Brennerstufen vorhanden sind, die je nach Auslastung der Gasturbinenanlage einzeln oder gemeinsam betrieben werden können. Typischerweise umfassen die parallelen Brennerstufen neben mindestens einer Haupt-Brennerstufe zumindest eine Pilot-Brennerstufe, wobei die Flamme der Pilot-Brennerstufe insbesondere die Flamme der Haupt-Brennerstufe stabilisieren soll.

Während des stationären Betriebs einer Gasturbinenanlage soll die freigesetzte Wärmemenge im Wesentlichen konstant gehalten werden. Schwankungen in der Brennstoffqualität führen jedoch zu Schwankungen in der freigesetzten Wärmemenge und damit der Leistung der Anlage. Um Schwankungen in der Brennstoffzusammensetzung zu kompensieren, weisen Gasturbinenanlagen daher eine Regelvorrichtung auf, mit der die Leistung oder die ebenfalls mit der freigesetzten Wärmemenge in Beziehung stehende Abgastemperatur der Anlage konstant gehalten wird.

Das Konstanthalten der Leistung bzw. der Abgastemperatur geschieht im Allgemeinen durch Regeln der Brennstoffzufuhr zur Haupt-Brennerstufe mittels eines Brennstoffmengenreglers.

Diese Vorgehensweise kann jedoch zu erhöhten Emissionen oder zu Verbrennungsschwingungen führen.

Aufgabe der vorliegenden Erfindung ist es daher, ein Verfahren zum Ausgleichen von Schwankungen in der Brennstoffzusammensetzung in einer Gasturbinenanlage, eine Regelvorrichtung zum Regeln der Brennstoffzufuhr in einer Gasturbinenanlage sowie eine Gasturbinenanlage zur Verfügung zu stellen, bei denen sich erhöhte Emissionen oder Verbrennungsschwingungen beim Ausgleichen der Schwankungen in der Brennstoffzusammensetzung wirkungsvoller vermeiden lassen.

Diese Aufgabe wird durch ein Verfahren nach Anspruch 1, eine Regelvorrichtung nach Anspruch 4 und eine Gasturbinenanlage nach Anspruch 5 gelöst. Die abhängigen Ansprüche enthalten vorteilhafte Ausgestaltungen der Erfindung.

In einem erfindungsgemäßen Verfahren zum Ausgleichen von Schwankungen der Brennstoffzusammensetzung in einer Gasturbinenanlage mit mindestens zwei parallel zu betreibenden Brennerstufen erfolgt als Reaktion auf die Schwankungen der Brennstoffzusammensetzung ein Regeln der Brennstoffzufuhr zu mindestens zwei der Brennerstufen, wobei beim Regeln der Brennstoffzufuhr der Brennstoffsplitt zwischen den Brennerstufen, d.h. die relative Verteilung des Brennstoffes auf die Brennerstufen, auf einen Zielwert eingestellt oder einem Zielwert gehalten wird. Dabei kann der Zielwert bspw. eine Konstante oder eine Funktion von einer oder mehreren Variablen sein. Insbesondere kann die Gasturbinenanlage eine Pilot-Brennerstufe und eine Haupt-Brennerstufe umfassen, wobei beim Regeln der Brennstoffzufuhr der Brennstoffsplitt zwischen Pilot- und Haupt-Brennerstufe auf einen Zielwert eingestellt oder auf einem Zielwert gehalten wird.

### Der Erfindung liegen die folgenden Erkenntnisse zugrunde:

Wie oben erwähnt, kann das Ausgleichen von Schwankungen in der Brennstoffzusammensetzung durch das Regeln der Brennstoffzufuhr zur Haupt-Brennerstufe mittels eines Brennstoffmengenreglers im ungünstigsten Fall zu einer Erhöhung der Emissionen oder zu Verbrennungsschwingungen führen. Die Ursache hierfür liegt darin, dass durch das Regeln der Brennstoffzufuhr zur Haupt-Brennerstufe der Brennstoffsplitt verändert wird. Beispielsweise kann ein Verändern des Brennstoffsplitttes zwischen einer Pilot- und einer Haupt-Brennerstufe die Stabilität der Haupt-Brenner-Flamme, die in der Regel die Flamme eines mageren Luft-Brennstoff-Gemisches ist, negativ beeinflussen. Das magere Luft-Brennstoff-Gemisch dient dazu, im Rahmen der sog. trockenen Entstickung die Emissionswerte der Anlage niedrig zu halten. Eine geringe Stabilität der Flamme des mageren Luft-Brennstoff-Gemisches wirkt sich daher in negativ auf die Emissionswerte der Anlage aus. Durch Halten des des Brennstoffsplitttes auf dem Zielwert oder das Einstellen des Brennstoffsplittes auf einen geeigneten neuen Zielwert können dagegen die negativen Auswirkungen auf die Stabilität der Haupt-Brenner-Flamme vermieden oder zumindest reduziert werden, so dass sich die oben genannten Nachteile vermeiden bzw. reduzieren lassen.

Das Regeln der Brennstoffzufuhr zu einem Brenner erfolgt typischerweise über ein Brennstoffregelventil, das eine Drossel darstellt. Die Ventile werden im Bereich eines kritischen Druckabfalls betrieben, d.h. der Brennstofffluss durch das Ventil ist proportional zum eingangsseitigen Brennstoffdruck und zum Ventilhub. Die in der Brennkammer freigesetzte Wärmemenge wird dabei über den Druckabfall im Ventil geregelt, wobei die freigesetzte Wärmemenge über den Wobbe-Index mit dem Druckverlust in Verbindung steht.

Solange nur eine Brennerstufe geregelt wird, wie dies im Stand der Technik üblich ist, werden die Regler-Kennwerte für eine bestimmte Standard-Brennstoffzusammensetzung, d.h. einen bestimmten Wobbe-Index, eingestellt, wobei eine gewisse Bandbreite der Abweichung der Brennstoffzusammensetzung vom Standard zugelassen ist. Die Abweichung vom Standard kann dabei als Störgröße des Regelsystems behandelt werden, die durch Konstanthalten der Leistung oder der Abgastemperatur der Gasturbinenanlage abgefangen werden kann. Die Kenntnis des aktuellen Wobbe-Index des Brennstoffes ist daher im Stand der Technik zum Regeln der Brennstoffzufuhr nicht nötig.

Die Kenntnis des tatsächlichen Wobbe-Index ermöglicht jedoch auch das Einstellen des Brennstoffsplitttes auf einen neuen, angepassten Zielwert bzw. das Halten des Brennstoffsplitttes auf dem aktuellen Zielwert, indem den Regler-Kennwerte zum Regeln des Druckverlustes in den Reglerventilen der einzelnen Brennerstufen der tatsächliche Wobbe-Index des Brennstoffes zugrunde gelegt wird.

In einer vorteilhaften Ausgestaltung des Verfahrens finden daher zum Regeln der Brennstoffzufuhr zu mindestens zwei der Brennerstufen jeweils ein Brennstoffregelventil und zugeordnete Regler-Kennwerte Verwendung, und die Regler-Kennwerte werden als Reaktion auf die Schwankungen in der Brennstoffzusammensetzung wie folgt aktualisiert:
- Durchführen einer Echtzeit-Analyse der Brennstoffzusammensetzung,
- Ermitteln des aktuellen Wobbe-Index des Brennstoffes anhand des Analyseergebnisses, und
- Aktualisieren der Regler-Kennwerte für die Regelventile anhand des ermittelten Wobbe-Index.

Mit Hilfe des aktuellen Wobbe-Index des Brennstoffes können in dieser Ausgestaltung die jeweiligen Druckverluste an den einzelnen Reglerventilen für jede Brennstoffzusammensetzung derart eingestellt werden, dass der Brennstoffsplitt auf einen neuen Zielwert eingestellt oder auf dem aktuellen Zielwert gehalten wird. Insbesondere ist mit der beschrieben Ausgestaltung des erfindungsgemäßen Verfahrens sichergestellt, dass die Regler-Kennwerte immer auf dem aktuellen Wobbe-Index des Brennstoffes beruhen, selbst wenn die Brennstoffzusammensetzung schnellen oder großen Änderungen unterworfen ist.

Eine zum Durchführen des erfindungsgemäßen Verfahrens geeignete Regelvorrichtung zum Regeln der Brennstoffzufuhr in einer Gasturbinenanlage mit mindestens zwei parallel zu betreibenden Brennerstufen und einer Brennstoffzufuhrregelung, die für die Brennerstufen jeweils ein Brenristoffregelventil und zugeordnete Regler-Kennwerte aufweist, umfasst:
- einen Analysator zum Analysieren der Brennstoffzusammensetzung in Echtzeit,
- eine Berechnungseinheit zum Berechnen des aktuellen Wobbe-Index des Brennstoffes, sowie
- eine Aktualisierungseinheit zum Aktualisieren mindestens der Regler-Kennwerte von zwei, verschiednen Brennerstufen zugeordneten Regelventilen anhand des ermittelten Wobbe-Index.

Eine erfindungsgemäße Gasturbinenanlage, mit der sich erhöhte Emissionen oder Verbrennungsschwingungen bei Änderungen der Brennstoffzusammensetzung vermeiden oder zumindest verringern lassen, umfasst mindestens zwei parallel zu betreibende Brennerstufen und eine erfindungsgemäße Regelvorrichtung. Insbesondere umfassen die Brennerstufen eine Pilot-Brennerstufe und eine Haupt-Brennerstufe, wobei die Aktualisierungseinheit der Reglervorrichtung zum Aktualisieren der Regler-Kennwerte der Regelventile der Haupt-Brennerstufe sowie der Pilot-Brennerstufe anhand des ermittelten Wobbe-Index ausgestaltet ist.

In einer vorteilhaften Ausgestaltung der erfindungsgemäßen Gasturbinenanlage umfasst diese eine Brennstoffleitung, durch welche ein Brennstoffstrom strömt, und einen an der Brennstoffleitung vorhandenen Abzweigpunkt zum Abzweigen eines Teils des Brennstoffes und zum Einleiten des abgezweigten Brennstoffes als Analysestrom in eine Zweigleitung, welche den Analysestrom dem Analysator zuführt. Der Abzweigpunkt ist dabei derart an der Brennstoffleitung angeordnet, dass die Zeit, die der Brennstoffstrom zum Zurücklegen des Weges vom Abzweigpunkt bis zu den Brennstoffregelventilen benötigt, ausreicht, damit der Analysestrom die Wegstrecke bis zum Analysator zurücklegen, der Analysator die Brennstoffzusammensetzung analysieren, die Berechnungseinheit den Wobbe-Index berechnen, die Aktualisierungseinheit die Regler-Kennwerte aktualisieren und die Regelvorrichtung die Brennstoffregelventile einstellen kann, bevor der Brennstoffstrom die Brennstoffregelventile erreicht.

Mit der beschrieben Ausgestaltung der Gasturbinenanlage ist sichergestellt, dass den Regler-Kennlinien immer der Wobbe-Index des gerade am Ventil ankommenden Brennstoffstromes zu Grunde gelegt werden kann, selbst dann, wenn die Brennstoffzusammensetzung auf einer sehr kurzen Zeitskala schwankt.

Weitere Merkmale, Eigenschaften und Vorteile der vorliegenden Erfindung ergeben sich aus der nachfolgenden Beschreibung eines Ausführungsbeispiels unter Bezugnahme auf die beiliegende Zeichnung.

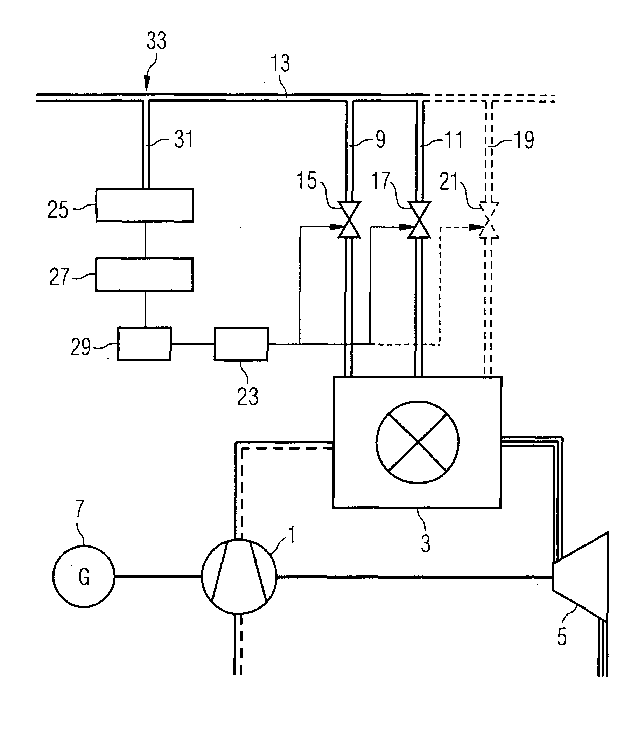

Fig. 1 zeigt ein Ausführungsbeispiel für die erfindungsgemäße Gasturbinenanlage in einer schematischen Darstellung.

Figur 1, die eine schematische Darstellung für eine Schaltung zum Aktualisieren der Regler-Kennwerte umfasst, zeigt eine Gasturbinenanlage mit einem Verdichter 1, einer Brennkammer 3 und einer Turbine 5, die mit einem Generator 7 gekoppelt ist.

Zur Brennkammer 3 führen eine erste Brennstoffzufuhrleitung 9 und eine zweite Brennstoffzufuhrleitung 11, die von einer Brennstoffleitung 13 abzweigen und jeweils mit einem Brennstoffregelventil 15, 17 ausgestattet sind. Mittels der Brennstoffzufuhrleitungen 9, 11 werden ein Pilotbrenner und ein Hauptbrenner (beide nicht dargestellt) mit Brennstoff versorgt. Neben dem Pilotbrenner und dem Hauptbrenner, die in der Regel parallel betrieben werden, können noch weitere, insbesondere parallel zu betreibende, Brennerstufen vorhanden sein, wie dies in der Figur durch eine weitere Brennstoffzufuhrleitung 19 und ein weiteres Brennstoffregelventil 21 angedeutet ist.

Um Schwankungen in der Brennstoffzusammensetzung ausgleichen zu können, umfasst die in der Figur dargestellte Gasturbinenanlage außerdem einen Regler 23 zum Regeln der Brennstoffzufuhr zu den einzelnen Brennerstufen in Abhängigkeit von der in der Brennkammer 3 freigesetzten Wärme. Diese kann bspw. über die Abgastemperatur oder die Leistung der Turbine 5 ermittelt werden, wie allgemein bekannt ist und daher hier nicht weiter erläutert werden soll. Der Regler 23 enthält Regler-Kennwerte, anhand derer das Einstellen der Brennstoffregelventile 15, 17 bei einer Änderung der in der Brennkammer 3 freigesetzten Wärmemenge erfolgt.

Die Gasturbinenanlage umfasst außerdem einen Analysator 25 zum Analysieren der Brennstoffzusammensetzung des durch die Brennstoffleitung 13 strömenden Brennstoffes, eine mit dem Analysator 25 zum Empfang des Analyseergebnisses in Verbindung stehende Berechnungseinheit 27 zum Berechnen des Wobbe-Index des Brennstoffes anhand des Analyseergebnisses und eine sowohl mit der Berechnungseinheit 27 zum Empfang des Wobbe-Index als auch mit dem Regler 23 zum Aktualisieren der Regler-Kennwerte in Verbindung stehende Aktualisierungseinheit 29.

Über eine von der Brennstoffleitung 13 abzweigende Zweigleitung 31 wird dem Analysator 25 eine geringe Menge des durch die Brennstoffleitung 13 strömenden Brennstoffes zugeführt, um ihn zu analysieren. Das Analyseergebnis gibt der Analysator 25 an die Berechnungseinheit 27 weiter, die den Wobbe-Index des analysierten Brennstoffes berechnet und den so ermittelten Wobbe-Index an die Aktualisierungseinheit 29 ausgibt. Diese aktualisiert anhand des empfangenen Wobbe-Index die Regler-Kennwerte für die Brennstoffregelventile 15, 17 in der Leittechnik des Reglers 23. Anhand der aktualisierten Regler-Kennwerte erfolgt dann das Einstellen der Brennstoffzufuhr zu den einzelnen Brennerstufen mittels der Brennstoffregelventile 15, 17. Das Anpassen der Regler-Kennlinien an den aktuellen Wobbe-Index des Brennstoffes ermöglicht es dabei, die Brennstoffzufuhr zu den einzelnen Brennerstufen derart zu regeln, dass ein Halten des Brennstoffsplittts auf dem aktuellen Zielwert oder ein Einstellen des Brennstoffsplitts auf einen geeigneten neuen Zielwert erfolgt.

Um auch auf schnelle Änderungen der Brennstoffzusammensetzung mit einem Halten des Brensstoffsplits auf dem Zielwert oder einem Einstellen des Brennstoffsplitttes auf einen neuen Zielwert reagieren zu können, zweigt die Zweigleitung 31 an einem Abzweigpunkt 33 der Brennstöffleitung 13 ab, dessen Entfernung von den Brennstoffregelventilen 15, 17 derart gewählt ist, dass die Zeit, die der in der Brennstoffleitung 13 strömende Brennstoff benötigt, um die Strecke zwischen dem Abzweigpunkt 33 und den Brennstoffregelventilen 15, 17 zurückzulegen, lange genug ist, damit die folgenden Schritte durchgeführt werden können:
1. Leiten des abgezweigten Brennstoffes zum Analysator.
2. Analysieren der Brennstoffzusammensetzung.
3. Berechnen des Wobbe-Index des Brennstoffes.
4. Aktualisieren der Regler-Kenngrößen.
5. Einstellen der Brennstoffregelventile.
Insbesondere wird der Moment des Einstellens der Brennstoffregelventile unter Berücksichtigung der Strömgeschwindigkeit der Brennstoffstromes dabei derart gewählt, dass das Einstellen immer genau anhand des Wobbe-Index des gerade an den Brennstoffregelventilen 15, 17 befindlichen Brennstoffes erfolgt.

Im dargestellten Ausführungsbeispiel sind die Berechnungseinheit 27, die Aktualisierungseinheit 29 und der Regler 23 als getrennte Einheiten dargestellt. Alternativ können die Berechnungseinheit 27 und/oder die Aktualisierungseinheit 29 auch in den Regler 23 integriert sein.

## Patentansprüche

1. Verfahren zum Ausgleichen von Schwankungen der Brennstoffzusammensetzung in einer Gasturbinenanlage mit mindestens zwei parallel zu betreibenden Brennerstufen in dem als Reaktion auf die Schwankungen der Brennstoffzusammensetzung ein Regeln der Brennstoffzufuhr zu mindestens zwei der Brennerstufen erfolgt und beim Regeln der Brennstoffzufuhr der Brennstoffsplitt zwischen den Brennerstufen auf einen Zielwert eingestellt oder einem Zielwert gehalten wird.

2. Verfahren nach Anspruch 1, bei dem die Gasturbinenanlage eine Pilot-Brennerstufe und eine Haupt-Brennerstufe umfasst und bei dem beim Regeln der Brennstoffzufuhr der Brennstoffsplitt zwischen der Pilot- und der Haupt-Brennerstufe auf den Zielwert eingestellt oder dem Zielwert gehalten wird.

3. Verfahren nach Anspruch 1 oder 2, bei dem zum Regeln der Brennstoffzufuhr für mindestens zwei der Brennerstufen jeweils ein Brennstoffregelventil und zugeordnete Regler-Kennwerte vorhanden sind, mit den Schritten:
- Durchführen einer Echtzeit-Analyse der Brennstoffzusammensetzung,
- Ermitteln des aktuellen Wobbe-Index des Brennstoffes anhand des Analyseergebnisses, und
- Aktualisieren der Regler-Kennwerte für die Brennstoffregelventile anhand des ermittelten Wobbe-Index.

4. Regelvorrichtung zum Regeln der Brennstoffzufuhr in einer Gasturbinenanlage mit mindestens zwei parallel zu betreibenden Brennerstufen und einer Brennstoffzufuhrregelung, die für die Brennerstufen jeweils ein Brennstoffregelventil (15, 17) und zugeordnete Regler-Kennwerte umfasst, mit:
- einem Analysator (25) zum Analysieren der Brennstoffzusammensetzung in Echtzeit,
- einer Berechnungseinheit (27) zum Berechnen des aktuellen Wobbe-Index des Brennstoffes, sowie
- einer Aktualisierungseinheit (29) zum Aktualisieren mindestens der Regler-Kennwerte von zwei, verschiednen Brennerstufen zugeordneten Regelventilen anhand des ermittelten Wobbe-Index.

5. Gasturbinenanlage mit mindestens zwei parallel zu betreibenden Brennerstufen, und einer Regelvorrichtung nach Anspruch 4.

6. Gasturbinenanlage nach Anspruch 5, **dadurch gekennzeichnet, dass** sie eine Pilot-Brennerstufe und eine Haupt-Brennerstufe umfasst und die Aktualisierungseinheit (29) der Reglervorrichtung zum Aktualisieren der Regler-Kennwerte der Brennstoffregelventile (15, 17) der Haupt-Brennerstufe sowie der Pilot-Brennerstufe anhand des ermittelten Wobbe-Index ausgestaltet ist.

7. Gasturbinenanlage nach Anspruch 5 oder 6, **gekennzeichnet durch** eine Brennstoffleitung (13), **durch** welche ein Brennstoffstrom strömt, und einen an der Brennstoffleitung (13) vorhandenen Abzweigpunkt (33) zum Abzweigen eines Teils des Brennstoffes und zum Einleiten des abgezweigten Brennstoffes als Analysestrom in eine den Analysestrom dem Analysator (25) zuführende Zweigleitung (31), wobei der Abzweigpunkt (33) derart an der Brennstoffleitung (13) angeordnet ist, dass die Zeit, die der Brennstoffstrom zum Zurücklegen des Weges vom Abzweigpunkt(33) bis zu den Brennstoffregelventilen (15, 17) benötigt ausreicht, damit der Analysestrom die Wegstrecke bis zum Analysator (25) zurücklegen, der Analysator die Brennstoffzusammensetzung analysieren, die Berechnungseinheit (27) den Wobbe-Index berechnen, die Aktualisierungseinheit (29) die Regler-Kennwerte aktualisieren und die Regelvorrichtung die Brennstoffregelventile (15, 17) einstellen kann, bevor der Brennstoffstrom die Brennstoffreglerventile (15,17) erreicht.
